# DEMANDE DE BREVET EUROPEEN

(11) **EP 0 717 930 A1**
(43) Date de publication de la demande: **26.06.1996**
(21) Numéro de dépôt: 94450010.7
(22) Date de dépôt: 20.12.1994
(51) Int. Cl.: A21C 11/12

(54) **Dispositif pour réaliser des entailles superficielles sur des pâtons de pain**

(71) Demandeur: SOCIETE KOPFE SARL, F-33000 Bordeaux (FR)
(72) Inventeur: Ambroise-Casterot, Laurent, F-33000 Bordeaux (FR)

(57) **Abrégé**

L'invention concerne un dispositif permettant de réaliser rapidement de facon automatique, des entailles superficielles sur un ensemble de pâtons de pain(9).

Il est constitué d'un ensemble de patins(3), montés fous sur des arbres horizontaux(2), équipés d'un outil tranchant(10) en contact sur les pâtons de pain(9) à entailler. Un ensemble mobile animé d'un mouvement de translation horizontale, de direction oblique par rapport aux pâtons de pain(9), entraine par l'intermédiaire des arbres(2), les patins(3). Pendant le glissement des patins(3) sur les pâtons de pain(9), les outils tranchants(10) réalisent les entailles superficielles. Un dispositif permet la montée des outils tranchants(10) en fin de course ainsi que leur descente en début de course.

Le dispositif selon l'invention est particulièrement destiné aux boulangeries industrielles, semi-industrielles et grandes surfaces.

## Description

La présente invention concerne un dispositif entièrement automatique pour réaliser des entailles superficielles sur des pâtons de pains avant leur mise au four, applicable aux boulangeries industrielles et semi-industrielles.

Les entailles superficielles sur les pâtons de pain sont traditionnellement effectuées manuellement par le boulanger, à l'aide d'une lame de rasoir ou tout autre outil tranchant du même type. Cette opération est longue et contraignante. Le boulanger doit réaliser plusieurs entailles sur sur l'axe longitudinal du pâton, inclinées sur l'horizontal, afin d'eviter le craquèlement du pâton pendant sa cuisson.

Le dispositif selon l'invention présentée, permet de réaliser rapidement de facon automatique, simultanément plusieurs entailles sur un ensemble de pâtons de pain déposés avantageusement sur des grilles ou sur un tapis enfourneur, à l'entrée d'un four tunnel par exemple. Le dispositif comporte un pont mobile, d'axe longitudinal perpendiculaire à l'ensemble des pâtons de pain déposés sur leur support pour leur entrée au four, se déplacant en translation suivant une direction oblique par rapport à l'axe longitudinal des pâtons de pain. Ce pont mobile est équipé de deux axes parallèles, contenus dans un plan parallèle au plan défini par l'ensemble des pâtons à entailler, qui permettent un mouvement de rotation d'un ensemble de patins articulés, disposés sur deux rangées parallèles. Ces pâtons sont montés fous sur les deux axes du pont mobile permettant la rotation libre et indépendante de chacun d'eux afin que l'autre extrémité de chaque patin glisse toujours dans des conditions convenables d'appui sur les pâtons de pain et ce malgré les variations de relief de chacun de ces dits pâtons. Chaque patin est orienté parallelement à la direction définie par la translation du pont mobile. Le processus reste identique qu'il s'agisse de pâtons disposés sur des plaques ou sur un tapis. Le déplacement du pont mobile est synchronisé au mouvement éventuel possible des pâtons, présentés pour être entaillés.

Pendant le déplacement du pont mobile, les patins sont entrainés dans un mouvement de translation de direction oblique par rapport à l'axe longitudinal de l'ensemble des patons de pain, déterminant l'orientation des entailles sur les pâtons. Pendant ce mouvement, chaque patin glisse sur au moins deux pâtons de pain distincts. Chacun des patins supporte à son extrémité libre, par l'intermédiaire d'un porte-outil amovible un outil tranchant qui vient entailler les pâtons rencontrés. Une découpe particulière du patin permet sur celui-ci le repérage géométrique permanent démontable du porte-outil muni lui même d'une empreinte d' assemblage. Un ressort lame solidaire du patin impose un effort de contact du porte outil sur le patin assurant ainsi la liaison complète démontable des deux pièces. Le démontage s'effectue facilement par action sur le ressort lame. La forme du patin permet d'eviter le contact de l'outil tranchant avec le support des pâtons, en assurant une surface d'appui permanente pour le patin sur les pâtons de pain entaillés. Le nombre de patins est variable selon le nombre et la nature des pâtons à inciser. Les patins etant disposés sur deux rangées parallèles distinctes, chaque pâton de pain est en contact simultané avec au moins deux patins.

Pendant l'execution des entailles sur l'ensemble des pâtons de pain déposés sur leur support, les outils tranchants situés aux extrémités des deux rangées de patins rencontrent sur leur trajectoire, en début ou en fin de déplacement, le dit support. Afin d'eviter la destruction rapide de ces outils tranchants, ces patins sont équipés d'un doigt de commande qui permet d'abaisser et de relever à bon escient ces patins sur les pâtons à entailler. Les doigts de commande glissent sur des pistes tubulaires disposées diagonalement opposées de part et d'autre du support des pâtons de pain.

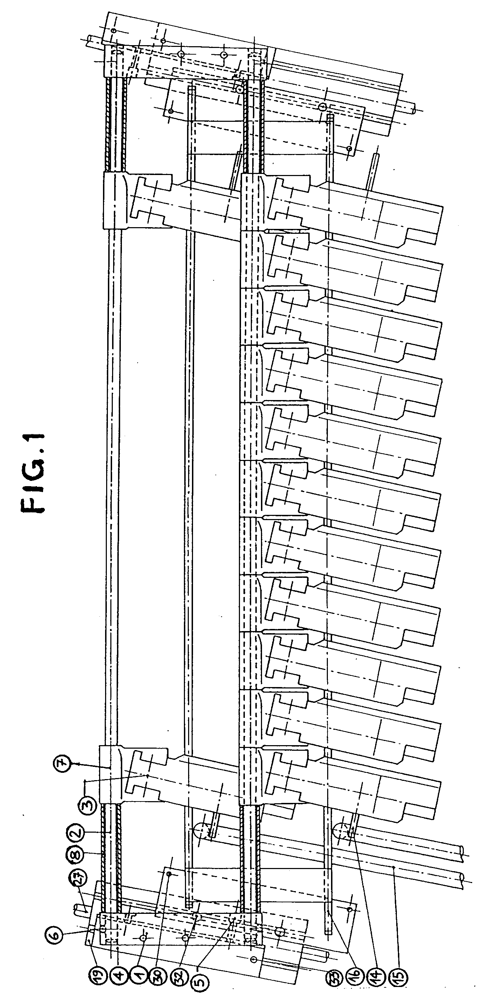

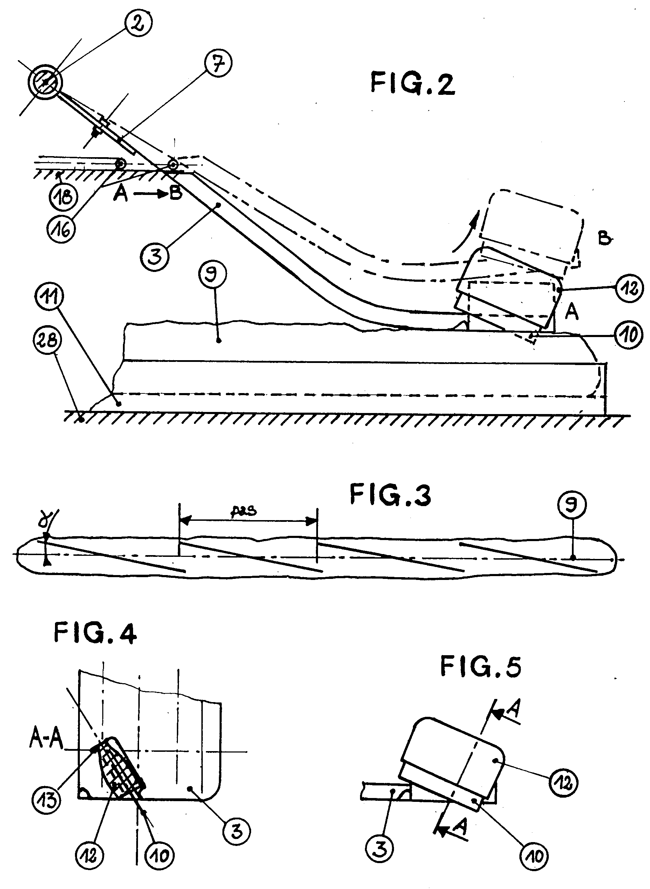

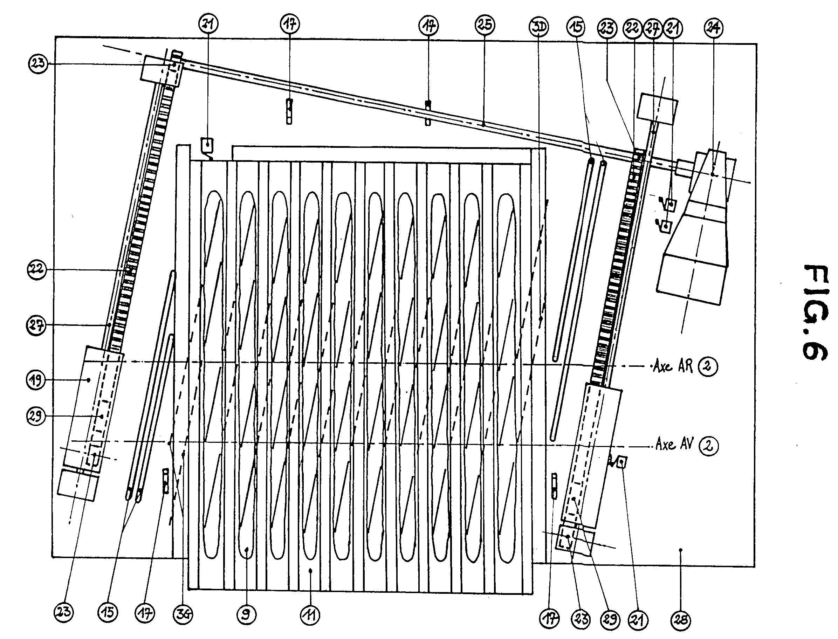

Après execution des entailles, l'ensemble des patins est relevé à l'aide d'un cadre rigide, emmené par le pont mobile dans son déplacement. Inscrit dans un plan parallèle au plan défini par l'ensemble des pâtons de pain, ce cadre rigide est animé dans ce même plan, d'un mouvement de translation par rapport au pont mobile, sous l'action d'une butée fixe de fin de course. L'ensemble des patins en butée sur le cadre, est animé d'un mouvement de rotation autour des axes d'articulation du pont mobile, générant ainsi, un mouvement ascendant de la totalité des outils tranchants.
Avant execution des entailles, une autre butée fixe de début de course, permet la translation en sens inverse du cadre rigide par rapport au pont mobile, assurant ainsi, la tombée gravitationnelle de l'ensemble des patins sur les pâtons de pain.
Selon des modes particuliers de réalisation:
- La profondeur de coupe est variable selon la position relative donnée à l'outil tranchant par rapport à la surface inferieure de glissement du patin, position ajustée par la réalisation d'un porte-outil adéquat.
- Le porte-outil peut comporter un axe de symetrie géométrique afin de pouvoir utiliser deux segments distincts du même fil tranchant de l'outil par retournement du porte-outil sur le patin, afin de doubler la durée d'utilisation de chaque outil.
- Le porte-outil peut-être réalisé en moulage assurant une liaison complète indémontable avec l'outil tranchant.
Les dessins annexés illustrent l'invention;
La figure 1 représente une vue d'ensemble du pont mobile, vue de dessus.
La figure 2 représente une vue de coté de l'ensemble mobile Patin-Chape-Cadre-Outil-tranchant.
La figure 3 représente un pâton de pain entaillé.
La figure 4 et la figure 5 représentent un porte-outil sur le patin.
La figure 6 représente une vue d'ensemble de la cinématique du dispositif.

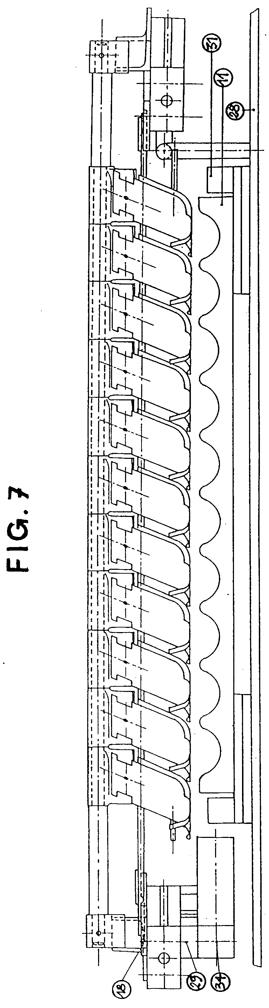

La figure 7 représente une vue d'ensemble du pont mobile, vue de face.
En référence à ces dessins, le dispositif monté sur une table roulante(28), comporte un pont mobile constitué de deux paliers(1) assemblés par deux arbres(2) supportant un ensemble de patins(3) disposés sur deux rangées distinctes. L'entraxe de ces arbres est égal au pas des entailles sur les pâtons de pain comme définis selon la figure 3. Chaque palier(1) est fixé sur une cornière(4) par l'intermédiaire de vis(5).
L'immobilisation de chacun des arbres(2) par rapport aux paliers(1) est assurée par deux vis sans tête(6). Chacun des patins(3) est monté fou sur un arbre(2) par l'intermédiaire d'une chape(7). Le calage axial des chapes(7) est assuré par quatre entretoises(8). Dans la forme de réalisation selon la figure 2, le patin(3) monté sur une chape(7) présente une surface inferieure plane glissant horizontalement sur le pâton de pain(9). Un rebord latéral sur le patin(3) évite le déchirement de la pâte lors du passage de celui-ci, et ce malgré la lecture de pâtons(9) distincts par le même patin(3), pendant son déplacement. Chaque patin(3) est tout d'abord en contact avec un premier pâton de pain, puis en contact simultanément avec deux pâtons de pain distincts, puis à nouveau, avec un seul pâton de pain. La forme de la surface inferieure plane permet une portée continue du patin(3) en évitant ainsi un contact possible entre l'outil-tranchant(10) et le support des pâtons de pain(11). La liaison entre le patin(3) et l'outil tranchant(10) est réalisée par l'intermédiaire d'un porteoutil(12).
Dans la forme de réalisation selon la figure 4 et la figure 5, le porte-outil(12) est réalisé en matière plastique alimentaire en une seule opération de moulage par injection, assurant le bon positionnement de l'outil tranchant(10) disposé en insert dans le moule. Le porte-outil(12) assure une liaison complète démontable de l'outil tranchant(10) par rapport au patin (3) par l'intermédiaire d'un ressort lame(13) en liaison complète avec le pâtin(3). La raideur du ressort(13) permet le maintien durable du porte-outil(12) sur le patin(3). Le changement d'outil-tranchant(10) est avantageusement facilité par simple manipulation du ressort lame (13), sans aucun danger de coupure pour l'opérateur. Un axe de symetrie géometrique du porte-outil(12) permet une réutilisation du même outiltranchant(10) par retournement du porte-outil(12) sur le patin(3).
En position initiale, les deux patins gauches (3G) munis d'un doigt de commande(14), sont disposés à l'exterieur du périmètre défini par le support(11) des pâtons de pain(9). Dans son mouvement oblique par rapport à l'ensemble des pains(9), le pont mobile entraine ces deux patins maintenus en position haute par l'intermédiaire de leur doigt de commande(14) en contact sur les pistes tubulaires(15).
A l'approche du premier pâton de pain(9) rencontré par les deux patins gauches(3G), leur doigt de commande(14) en contact sur les pistes tubulaires(15), permettent la tombée puis le contact de chacun d'eux sur le pâton de pain(9). De facon analogue, les patins droits(3D) en fin de travail sur le dernier pâton de pain(9), sont soulevés par leur doigt de commande(14) en contact sur les pistes tubulaires(15) et maintenus ainsi en position haute jusqu'à l'arret du pont mobile à la fin de son déplacement. En fin de déplacement, position arrière du pont mobile, le cadre(16) en contact avec les butées fixes arrières (17AR), coulisse sur les semelles de glissement(18) montées sur les chariots(19) par l'intermédiaire des vis(20).
Dans la forme de réalisation selon la figure 1, le cadre(16) est réalisé par deux axes parallèles soudés sur deux plats.
L'entraxe est égal à la distance séparant deux entailles consécutives sur le même pâton de pain(9). En position arrière du pont mobile, le cadre(16) est immobilisé sur chacun des paliers(1) par des empreintes réalisées sur les semelles de glissement(18). Chacun des axes du cadre(16) est en butée sur une rangée de patins(3). Le cadre(16) dans sa translation sur les semelles de glissement(18) assure la relevée simultanée de l'ensemble des patins(3) par leur rotation ascendante autour des arbres(2). Pendant l'avance du pont mobile, le cadre (16) reste fixe par rapport aux paliers(1). En fin de déplacement, position avant, le cadre(16) en contact avec les butées fixes avant(17AV), coulisse à nouveau sur les semelles de glissement(18) et permet la retombée de l'ensemble des patins(3) par leur rotation descendante autour des arbres(2). La course du cadre(16) sur les semelles de glissement(18) est limitée par les pions de retenue(30).
Le cycle de fonctionnement du dispositif est le suivant;
Le pont mobile constitué des chariots(19), des arbres(2), des cornières(4), des paliers(1), des semelles de glissement(18), des patins(3), des chapes(7), des entretoises(8), du cadre(16) est en position arrière. Le cadre(16) est logé dans les empreintes réalisées à cet effet sur les semelles(18). Les patins (3) sont en position relevée, en butée sur les axes du cadre (16). Le cadre est en contact avec les butées fixes arrières (17AR). Le pont mobile avance guidé par la liaison glissière orientée suivant la direction définie par l'orientation α des entailles. L'ensemble des patins(3) est relevé. Les outils tranchants(10) ne sont pas en contact avec les pâtons de pain (9) disposés avantageusement sur leur support(11). Le pont mobile arrive en position avant. Le cadre(16) est en contact avec les butées fixes avant(17AV). Il est animé d'un mouvement de translation arrière par rapport aux semelles de glissement(18). Il quitte les empreintes des semelles(18). Suite au recul du cadre(16) par rapport aux arbres(2), l'ensemble des deux rangées distinctes des patins(3) descend, jusqu'au contact des patins(3) sur les pâtons de pain(9). Les patins gauches(3G) sont maintenus en position haute par leur doigt de commande(14) en contact sur les pistes tubulaires gauches(15G) Le pont mobile recule. L'ensemble des patins(3) est trainé sur l'ensemble des' pâtons de pain(9) suivant une direction oblique définie par l'angle α, inclinaison des entailles par rapport à l'axe longitudinal des pâtons de pain(9). Les entailles superficielles sont réalisées par l'ensemble des outils tranchants(10). Pendant l'incision des pâtons de pain(9), les deux patins gauches(3G) sont déposés par la lecture de leur doigt de commande(14) des pistes tubulaires gauches(15G) sur le premier pâton de pain rencontré, les deux patins droits(3D) sont relevés par leur doigt de commande(14) en contact sur les pistes tubulaires droites(15D), après avoir entaillé le dernier pâton de pain rencontré. Le pont mobile arrive en position arrière. Le cadre(16) est en contact avec les butées fixes arrières(17AR). Il est animé d'un mouvement de translation avant par rapport aux semelles de glissement(18). Il s'immobilise dans les empreintes des semelles(18) prévues à cet effet: suite à l'avancée du cadre(16) par rapport aux arbres(2), l'ensemble des deux rangées distinctes de patins(3) remonte jusqu'à l'arret en translation du pont mobile, une fois l'ensemble des outils tranchants(10) dégagés avantageusement des pâtons de pain(9) entaillés. Le dispositif est à nouveau en position initiale, départ cycle.
Des capteurs de position(21) sont placés sur le dispositif, afin de renseigner la partie commande sur l'etat de la partie opérative. A titre d'exemple non limitatif, le dispositif disposera d'un capteur présence support de pains, d'un capteur début de course, d'un capteur fin de course.
Dans la forme de réalisation selon la figure 6, les chariots (19) sont entrainés en translation par une courroie crantée (22) solidaire des chariots(19) par l'intermédiaire d'un attache courroie(29), montée sur des systèmes d'entrainement(23) La rotation des roues dentées des systèmes d'entrainement(23), est assurée par un motoréducteur electrique(24) piloté par un variateur de vitesse electronique, assurant l'accélération, le déplacement à vitesse constante, puis la deccélération de l'ensemble mobile. Pour un meilleur fonctionnement du dispositif, l'entrainement par courroie sera bilatéral, synchronisé par un élément de liaison(25). La liaison glissière des chariots est réalisée par un ensemble axe de guidage fixe-douilles à billes solidaires du chariot.
Selon des modes de réalisation;
- Le pont mobile peut-etre équipé d'un capot, assurant la protection de l'opérateur pendant le déplacement de l'ensemble des outils tranchants.
- L'ensemble du dispositif peut-etre capoté, assurant sa protection et permettant la localisation d'un tableau de bord.

Le dispositif selon l'invention est particulièrement destiné aux boulangeries industrielles, semi-industrielles et grandes surfaces.

## Revendications

1. **Dispositif pour réaliser des entailles superficielles sur des pâtons** disposés parallèlement les uns à côté des autres sur des paniers ou grilles destinés à les supporter pendant leur cuisson, comportant un ensemble mobile (1,2,3,16), guidé en translation par des glissières (27) selon une direction oblique par rapport aux axes longitudinaux des pâtons (9), entraînant, par pâton à entailler, deux patins (3) supportant chacun un outil tranchant (10), caractérisé en ce que - chacun des patins (3) support à une extrémité d'un outil tranchant (10), est articulé, à l'autre extrémité, en rotation sur un arbre horizontal (2) entraîné par l'ensemble mobile (1,2,3,16) de façon à permettre de son propre poids le glissement du patin (3) muni de son outil tranchant (10) successivement sur au moins deux pâtons (9) distincts générant chaque fois une entaille, ledit patin reposant en position relevée au tout début et en fin de course de l'ensemble mobile sur une butée (16,18) est libéré en fin de course - chacun des patins (3) articulé en rotation aux extrémités de l'arbre horizontal (2) est en outre assujetti latéralement de façon, à rester en position relevée lorsqu'il est situé hors du périmètre défini par l'ensemble des pâtons (9), à descendre lorsqu'il est situé à l'intérieur de ce périmètre, de sorte que le patin (3) muni de son outil tranchant (10), glissant alors sur le pâton (9) disposé en bordure du périmètre, génère une entaille.

2. **Dispositif pour réaliser des entailles superficielles sur des pâtons** (9) selon la revendication 1 caractérisé en ce que l'articulation en rotation de chacun des patins (3) sur l'arbre horizontal (2) de l'ensemble mobile est une rotation libre et indépendante obtenue par l'intermédiaire d'une chape (7) réalisée sur le patin (3) à l'extrémité opposée à celle du support de l'outil tranchant (10).

3. **Dispositif pour réaliser des entailles superficielles sur des pâtons** selon une des revendications 1 ou 2 caractérisé en ce que l'ensemble des patins (3), parallèles entre eux, est disposé sur un plan parallèle au plan défini par l'ensemble des pâtons, selon deux rangées parallèles constituées par les arbres horizontaux (2) assemblés par deux paliers (1) guidés en translation par des glissières (27) pour former un pont mobile constituant l'ensemble mobile.

4. **Dispositif pour réaliser des entailles superficielles sur des pâtons** selon une quelconque des revendications précédentes caractérisé en ce les butées (16,18) sur lesquelles reposent les patins (3) en position relevée au tout début et en fin de course de l'ensemble mobile sont constituée par deux axes parallèles liés entre eux pour former un cadre rigide (16) coulissant sur des semelles (18) fixées sur l'ensemble mobile de façon que ledit cadre rigide (16) s'appuyent sur des butées fixes (17) opère un déplacement relatif par rapport à l'ensemble mobile pour relever simultanément les patins (3) en fin de course et les libérer simultanément en début de course de l'ensemble mobile.

5. **Dispositif pour réaliser des entailles superficielles sur des pâtons** selon une quelconque des revendications précédentes caractérisé en ce que les patins (3) articulés en rotation aux extrémités des arbres horizontaux (2) sont munis latéralement de doigts de commande (14) orientés vers l'extérieur s'appuyant sur des pistes tubulaires (15) fixes disposées diagonalement opposées de part et d'autre du périmètre défini par l'ensemble des pâtons de façon que lesdits patins restent en position relevée lorsqu'ils sont hors de ce périmètre et descendent lorsqu'ils sont à l'intérieur pour que les patins (3) munis de leurs outils tranchants glissant sur les pâtons (9) disposés en bordure du périmètre génèrent chacun une entaille.

6. **Dispositif pour réaliser des entailles superficielles sur des pâtons** selon l'une quelconque des revendications précédentes caractérisé en ce que la liaison entre le patin (3) et l'outil tranchant (10) est réalisé par l'intermédiaire d'un porte outil (12) facilitant le démontage de l'outil tranchant (10) et permettant sa réutilisation par retournement, du porte outil (12) sur le patin (3).
